# EUROPEAN PATENT SPECIFICATION

(11) **EP 0 760 296 B1**
(45) Date of publication and mention of the grant of the patent: **15.03.2000**
(21) Application number: 96306215.3
(22) Date of filing: 28.08.1996
(51) Int. Cl.: B60C 9/22

(54) **Pneumatic vehicle tyre**
Luftreifen für Fahrzeuge
Bandage pneumatique pour véhicules

(30) Priority: 30.08.1995 DE 19531971
(43) Date of publication of application: 05.03.1997
(73) Proprietor: Dunlop GmbH, 63450 Hanau (DE)
(72) Inventor: Schomburg, Jurgen, 63517 Rodenbach (DE)
(74) Representative: Stewart, Charles Geoffrey

(56) References cited:
- EP-A- 0 474 314
- EP-A- 0 524 701
- FR-A- 2 285 255
- FR-A- 2 614 582
- LU-A- 85 964

## Description

The present invention relates to a pneumatic vehicle tyre comprising a carcass, a tread strip and a breaker arrangement provided between the carcass and the tread strip.

The breaker arrangement in pneumatic vehicle tyres serves, above all, to reduce the rolling resistance of the tyre and to provide good steering reaction and steering stability. In customary pneumatic vehicle tyres the breaker arrangement comprises at least two rubberised plies which are laid above one another in ring-like manner around the carcass and in which reinforcement cords are embedded which extend parallel to one another. The cords normally have an angle of inclination to the circumferential direction of the tyre in the range 15° to 27°, in order to be able to transmit both propulsion forces and also side forces in the tyre. The cords of sequential breaker plies in this arrangement are oppositely inclined to the circumferential direction of the tyre in order to form a crossed or trellised assembly.

The manufacture of known breakers is carried out by firstly manufacturing an endless finished band with reinforcement cords extending in the longitudinal direction embedded in a rubber mixture, then cutting the band at an angle which corresponds to the desired angle of inclination of the cords to the circumferential direction of the tyre and batching up the material to give breaker material with the cords at the desired angle. This material is then used to assemble the breaker during tyre manufacture.

The manufacture of such breakers is relatively complicated and expensive and at least two breaker plies are always necessary which substantially influence the tyre weight, in particular when steel cords are used in the breaker plies. The joint between the start and end of each breaker ply moreover impairs the uniformity of the tyre and the cut edges with free steel cord ends lead to an increased danger of separation of the breaker.

In another prior tyre shown in DE-39 17 735 C2 reinforcement threads or cords are embedded in a rubber strip which is narrow in comparison to the tyre width and are laid around the carcass in the form of a helical strip winding, with the threads or cords extending in the longitudinal direction of the strip and successive turns in an overlapping arrangement.

Through the arrangement of the threads or cords in the longitudinal direction of the rubber strip which is helically placed around the carcass, the manufacture of the breaker arrangement of this tyre is considerably simplified when compared with customary breaker arrangements. The strip which can be manufactured in endless form is applied on a drum, for example to provide a shoulder region of the tyre and is formed into a helical overlapping strip winding by rotation of the drum and simultaneous axial movement of the strip. The prior cutting of the strip at an angle which corresponds to the desired angle of inclination of the cords relative to the circumferential direction of the tyre is thus not necessary.

In this known pneumatic vehicle tyre, the sequential turns of strip always overlap, with the width of overlap varying over the width of the tyre in order to intentionally set the breaker stiffness over the width of the tyre. This tyre has the disadvantage that the weight of the breaker arrangement is relatively large as a result of the large winding density. A further disadvantage lies in the fact that only a very small angle of inclination can be set for the threads or cords relative to the circumferential direction of the tyre.

A tyre having such a helically wound band in which neighbouring turns abut without overlapping is known from LU-A-85964, whilst EP-A-0 474 314 discloses a band comprising a single layer having spaced apart windings.

The present invention has the object of so further developing a pneumatic tyre of the initially named kind in which these disadvantages do not occur. In particular, the tyre weight should be reduced and the setting of a greater angle of inclination of the threads or cords should be made possible.

According to the present invention a pneumatic vehicle tyre comprises a carcass, a tread strip and a breaker arrangement provided between the carcass and the tread strip and comprising reinforcement threads or cords which serve as load carrying members, which extend essentially parallel to one another, which are embedded into a rubber strip which is narrow in comparison to the tyre width and which are laid around the carcass in the form of a helical strip winding, wherein the threads or cords extend in the longitudinal direction of the strip, the strip winding being wound over substantially the full tyre width without mutual overlapping of neighbouring windings, neighbouring turns of the strip windings having a spacing from one another at least in the central tyre region disposed between the two shoulder regions, characterised in that at least two strip windings are arranged above one another which respectively have windings spaced from one another; and the turns in the individual strip windings are so disposed that they abut with the turns of a strip winding lying beneath them or overlap the latter in shingle-like manner.

In one embodiment of the invention strip windings arranged above one another have cords which are respectively oppositely disposed relative to the circumferential direction of the tyre. Through this layout, the threads or cords form a crossed assembly which increases the strength of the breaker arrangement. This design can thus preferably be provided for applications in which very high requirements are placed on the strength and the dynamic characteristics of the breaker arrangement.

A layout of this kind can for example be achieved by a plurality of strips are present which are laid above one another, or by a strip wound in several helical layers around the carcass, for example by winding starting from one tyre shoulder and going to the other tyre shoulder and subsequently back in the reverse direction.

In accordance with the invention neighbouring turns of the strip winding have a spacing from one another at least in the central tyre region disposed between the two shoulder regions.

In this way the angle of inclination of the cords can, if required, be further enlarged relative to the circumferential direction of the tyre. Through at least two strip windings arranged above one another an extensive coverage of the relevant tyre region can be achieved despite the spacing between neighbouring turns of each strip winding.

The spacing between neighbouring turns can differ over the width of the tyre. In this manner, the angle of inclination of the threads or cords to the circumferential direction of the tyre is variable over the tyre width and the characteristics of the tyre in the individual tyre regions can be precisely set. A greater extension is thereby possible, in particular in the zenith of the tyre, whereas the shoulder regions have only a low extensibility.

By arranging a plurality of strip windings above one another, as a whole, a complete coverage of the tyre region is present between the two tyre shoulders. For this purpose, the turns in the individual strip windings are so laid they abut with the turns of a lower lying strip winding or partially overlap the latter. This can, for example, be advantageous in tyres which must withstand high loads, such as, for example, tyres for trucks or construction machinery.

Basically, any customary material, for example steel, can be used as the material for the threads or cords in the strip. However, a textile material, in particular aramide or a hybrid material of aramide and another textile material such as nylon or rayon, can be used. It is important that the threads or cords have adequate tensile strength in order to restrict the extension of the tyre to the permitted degree.

With a plurality of strip windings arranged above one another, different materials can also be used for the individual windings. Basically, it is also possible to assemble the strip for one strip winding from two or more parts with different materials.

Finally, the breaker arrangement can, in accordance with an embodiment of the invention, be formed from a strip winding without a cover or bandage. In this way, a particularly simple layout and a low weight of the tyre of the invention results.

An embodiment of the invention is shown in the drawing and will be described in the following. There are shown
Figure 1 a perspective partly section representation of a pneumatic vehicle tyre in accordance with the invention;
Figure 2 a partial cross-section through an arched drum with a breaker arrangement in accordance with the invention and a tread strip placed thereon; and
Figure 3 a partial cross-section through a pneumatic vehicle tyre built up in accordance with the invention.

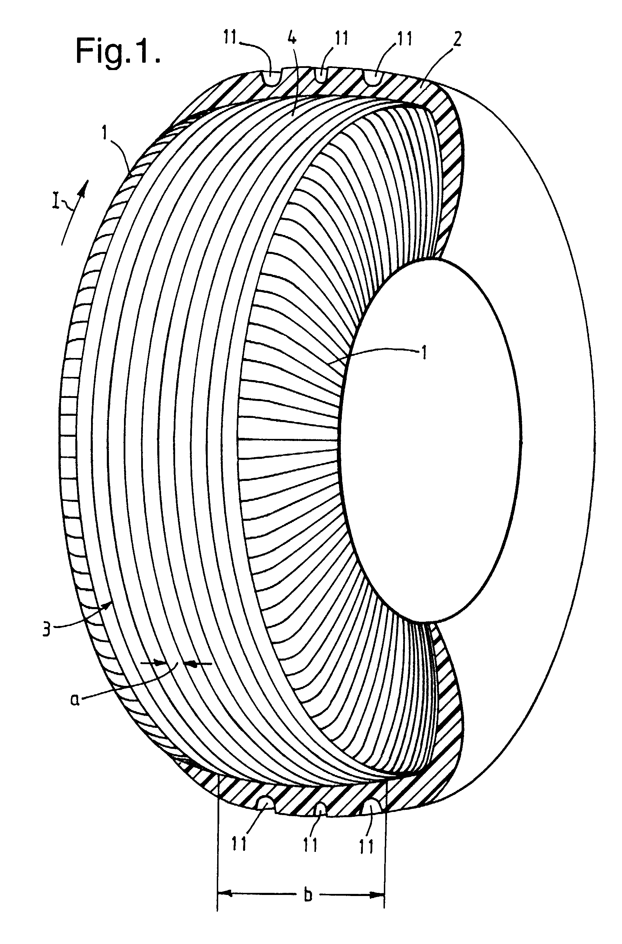

In the tyre shown in Figure 1, only the tyre components which are necessary for an understanding of the invention are shown, namely a carcass 1 which forms the inner termination of the tyre, a tread strip 2 which forms the tyre running surface and a breaker arrangement 3 provided between the carcass 1 and the tread strip 2.

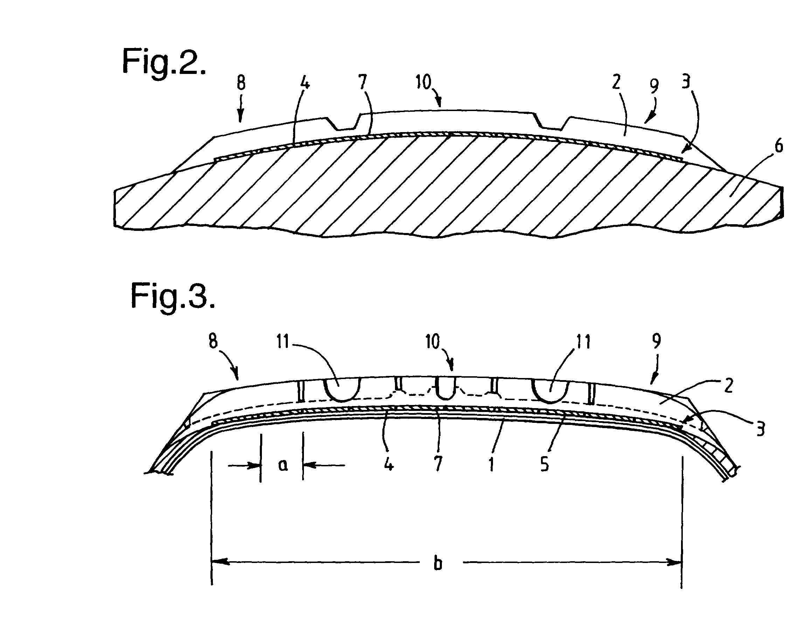

The breaker arrangement 3 consists of a strip 4 which is narrow in relationship to the tyre width b and which is laid in the form of helical strip winding around the carcass 1. The strip 4 consists of reinforcement threads or cords 5 extending in the longitudinal direction of the strip, and embedded in a rubber mixture, and has, for example, a width a of approximately 10 to 15mm. The threads or cords 5 are indicated in Figure 3, where the strip 4 is shown by way of example with only three cords 5, although, as a rule, a larger number of cords 5 is present in the strip 4, for example approximately 12 cords per centimetre of strip width. The carcass 1 and the tread strip 2 can be built up in the customary manner.

Figure 2 shows the arrangement of the strip 4 on a drum 6 arched in the axial direction. The strip 4 is wound with the turns abutting over the entire tyre width b so that a dense strip winding 3 is formed. An overlap between neighbouring turns can only be present at the start and end of the strip winding 3 in order to achieve a side edge of the breaker arrangement 3 which is parallel to the mid-circumferential plane of the tyre. The tread strip 2 is directly laid onto the strip winding 3.

The manufacture of a pneumatic vehicle tyre in accordance with the invention takes place, for example, in such a way that a strip 4 consisting of threads or cords 5 embedded in a rubber mixture is would onto the drum 6 which is arched in the axial direction. For this the strip 4 is placed in a later shoulder region 8 of the tyre, the drum 6 is subsequently rotated about its axis and at the same time the strip 4 is moved in the direction of the drum axis towards the second, later, shoulder region 9 of the tyre. The tread strip is then applied onto the finished strip winding 3.

The tread strip 2 and the strip winding 3 are now grasped by a holding device which is not shown here and the drum 6 is subsequently radially contracted. The holding device then transports the strip winding 3 with the tread strip 2 to a likewise not shown tyre building drum on which a finish prepared carcass 1 is arranged. There, the carcass 1 is shaped into the ring formed by the strip winding 3 and the tread strip 2. This tyre blank is subsequently placed into a heated tyre mould and is vulcanised out while moulding the tread profile 11.

The manufacture of the strip 4 for the strip winding 3 preferably takes place in an endless manufacturing technique, with the treads or cords which serve as load carrying elements being embedded parallel to one another into a rubber mixture. This endless band must then only be split up into strips 4 with the length required for a strip winding 3.

The manufacture of the pneumatic vehicle tyre of the invention is thus simplified in comparison to customary tyres. Moreover, with the tyre of the invention, a cover ply over the breaker arrangement can be dispensed with which leads to an additional saving of tyre weight.

Figure 3 shows a part section of a pneumatic vehicle tyre in accordance with the invention manufactured in this way. One recognises the simple build up, with a simple strip winding 3 which is arranged directly on the carcass 1 and which is directly followed by the tread strip 2 with the moulded tread pattern profile grooves 11. There is thus no additional cover ply present on the strip winding 3.

Neighbouring turns 7 of the strip winding 3 respectively abut against each other so that the strip winding 3 fully covers over the carcass 1 from one shoulder region 8 to the other shoulder region 9.

The strip winding 3 can, however, also be executed in such a way that neighbouring turns 7 have a spacing from one another, particularly in the middle region of the tyre, and the spacing between the turns 7 can also change over the width b of the tyre.

Depending on the application, a plurality of strip windings 3 can also be arranged above one another and the individual windings are preferably then so executed that the threads or cords 5 in sequential windings are oppositely inclined to the circumferential direction I of the tyre.

The extension behaviour of the tyre can be set via the angle of inclination of the cords 5 to the tyre circumferential direction I. Thus, the angle of inclination can, for example, amount to approximately 5° when the individual windings 7 of the strip winding 3 are wound mutually abutting. Large angles of inclination relative to the circumferential direction I of the tyre can be achieved by spacing apart neighbouring windings 7, with the angle of inclination also being variable across the width of the tyre b in order to endow different tyre regions with different extension characteristics.

Thus, for example, a smaller spacing and thus a smaller angle can be present in the two shoulder regions 8 and 9, whereas neighbouring windings 7 in the intermediate middle region of the tyre 10 can have a larger spacing relative to one another, so that they extend at a larger angle to the circumferential direction I of the tyre, n particular at an angle between approximately 15° and approximately 27°. The extensibility of the middle tyre region 10 is thus increased relative to the two shoulder regions 8 and 9.

Steel or aramide or another textile material, in particular also a hybrid material or aramide and, for example, rayon or nylon, can be used as a material for threads or cords 5 of the strip 4.

When a plurality of strip windings 3 are arranged above one another, it can be advantageous to use different materials for the cords 5 in the individual strip windings 3.

The pneumatic vehicle tyre of the invention is characterised by a simply layout, by a low weight and by good tyre characteristics. A further advantaged consists in the lower rolling resistance, in the increased comfort and the lower unsprung mass of the tyre of the invention.

## Claims

1. A pneumatic vehicle tyre comprising a carcass (1), a tread strip (2) and a breaker arrangement (3) provided between the carcass (1) and the tread strip (2) and comprising reinforcement threads or cords which serve as load carrying members, which extend essentially parallel to one another, which are embedded into a rubber strip (4) which is narrow in comparison to the tyre width (b) and which are laid around the carcass (1) in the form of a helical strip winding (3), wherein the threads or cords (5) extend in the longitudinal direction of the strip, the strip winding (3) being wound over substantially the full tyre width (b) without mutual overlapping of neighbouring windings (7), neighbouring turns (7) of the strip windings (3) having a spacing from one another at least in the central tyre region (10) disposed between the two shoulder regions (8,9), characterised in that at least two strip windings are arranged above one another which respectively have windings spaced from one another; and the turns in the individual strip windings are so disposed that they abut with the turns of a strip winding lying beneath them or overlap the latter in shingle-like manner.

2. A pneumatic vehicle tyre in accordance with claim 1, characterised in that the threads or cords (5) in sequential strip windings (3) are inclined in opposite directions relative to the circumferential direction (I) of the tyre.

3. A pneumatic vehicle tyre in accordance with either of claims 1 or 2, characterised in that the spacing of adjacent turns (7) differs over the width of the tyre (b).

4. A pneumatic vehicle tyre in accordance with any of the preceding claims, characterised in that the strip winding (3) has its start in one shoulder region (8) of the tyre and its end in the other shoulder region (9) of the tyre.

5. A pneumatic vehicle tyre in accordance with any of the preceding claims, characterised in that the strip winding (3) is not provided with a cover layer.

6. A pneumatic vehicle tyre in accordance with any of the preceding claims, characterised in that the threads or cords (5) consist of steel.

7. A pneumatic vehicle tyre in accordance with any of the claims 1 to 5, characterised in that the threads or cords (5) consist of textile material, in particular aramide or a hybrid material with aramide and another textile material such as nylon or rayon.

## Patentansprüche

1. Fahrzeugluftreifen, umfassend eine Karkasse (1), einen Laufflächenstreifen (2) und eine Breakeranordnung (3), die zwischen der Karkasse (1) und dem Laufflächenstreifen (2) vorgesehen ist und Verstärkungsfäden oder -corde umfaßt, die als lasttragende Elemente dienen, die sich im wesentlichen parallel zueinander erstrecken, die in einen Gummistreifen (4) eingebettet sind, der im Vergleich mit der Reifenbreite (b) schmal ist, und die um die Karkasse (1) herum in der Form einer wendelförmigen Streifenwicklung (3) gelegt sind, wobei sich die Fäden oder Corde (5) in der Längsrichtung des Streifens erstrecken, die Streifenwicklung (3) über im wesentlichen die volle Reifenbreite (b) ohne gegenseitige Überlappung von benachbarten Wicklungen (7) gewickelt ist und benachbarte Windungen (7) der Streifenwicklungen (3) mindestens in dem zentralen Reifenbereich (10), der zwischen den beiden Schulterbereichen (8, 9) angeordnet ist, einen Abstand voneinander aufweisen, dadurch gekennzeichnet, daß mindestens zwei Streifenwicklungen übereinander angeordnet sind, die jeweils voneinander beabstandete Wicklungen aufweisen, und daß die Windungen in den einzelnen Streifenwicklungen derart angeordnet sind, daß sie an den Windungen einer Streifenwicklung anliegen, die unter diesen liegt, oder die letztere auf eine schindelartige Weise überlappen.

2. Fahrzeugluftreifen nach Anspruch 1, dadurch gekennzeichnet, daß die Fäden oder Corde (5) in aufeinanderfolgenden Streifenwicklungen (3) in entgegengesetzte Richtungen relativ zur Umfangsrichtung (I) des Reifens geneigt sind.

3. Fahrzeugluftreifen nach Anspruch 1 oder Anspruch 2, dadurch gekennzeichnet, daß sich der Abstand von benachbarten Windungen (7) über die Breite des Reifens (b) unterscheidet.

4. Fahrzeugluftreifen nach einem der vorhergehenden Ansprüche, dadurch gekennzeichnet, daß der Beginn der Streifenwicklung (3) in einem Schulterbereich (8) des Reifens liegt, und ihr Ende in dem anderen Schulterbereich (9) des Reifens liegt.

5. Fahrzeugluftreifen nach einem der vorhergehenden Ansprüche, dadurch gekennzeichnet, daß die Streifenwicklung (3) nicht mit einer Deckschicht versehen ist.

6. Fahrzeugluftreifen nach einem der vorhergehenden Ansprüche, dadurch gekennzeichnet, daß die Fäden oder Corde (5) aus Stahl bestehen.

7. Fahrzeugluftreifen nach einem der Ansprüche 1 bis 5, dadurch gekennzeichnet, daß die Fäden oder Corde (5) aus Textilmaterial, insbesondere Aramid, oder einem Hybridmaterial mit Aramid und anderem Textilmaterial, wie Nylon oder Reyon, bestehen.

## Revendications

1. Pneumatique pour véhicule, comprenant une carcasse (1), un bandage (2) de bande de roulement et un ensemble à nappe sommet (3) placé entre la carcasse (1) et le bandage (2) de bande de roulement et comprenant des fils ou câblés d'armature utilisés comme organes d'encaissement des charges, s'étendant en direction pratiquement parallèle les uns aux autres, enrobés dans un bandage de caoutchouc (4) qui est étroit par rapport à la largeur du pneumatique (b) et qui sont placés autour de la carcasse (1) sous forme d'un enroulement hélicoïdal (3) de bandage, dans lequel les fils ou câblés (5) s'étendent dans la direction longitudinale du bandage, l'enroulement (3) du bandage étant enroulé pratiquement sur toute la largeur (b) du pneumatique sans recouvrement mutuel des enroulements voisins (7), les spires voisines (7) des enroulements (3) du bandage ayant un espacement mutuel, au moins dans la région centrale (10) du pneumatique placée entre les deux régions (8, 9) d'épaulement, caractérisé en ce que deux enroulements de bandage au moins sont placés l'un au-dessus de l'autre et ont respectivement des enroulements espacés, et les spires des enroulements individuels de bandage sont disposées afin qu'elles soient en butée contre les spires d'un enroulement de bandage placé au-dessous ou recouvrent ces dernières avec un décalage.

2. Pneumatique pour véhicule selon la revendication 1, caractérisé en ce que les fils ou câblés (5) des enroulements successifs (3) de bandage sont inclinés en sens opposés par rapport à la direction circonférentielle (I) du pneumatique.

3. Pneumatique pour véhicule selon la revendication 1 ou 2, caractérisé en ce que l'espacement des spires adjacentes (7) est différent sur la largeur du pneumatique (b).

4. Pneumatique pour véhicule selon l'une quelconque des revendications précédentes, caractérisé en ce que l'enroulement (3) de bandage a son début dans une région d'épaulement (8) du pneumatique et sa fin dans l'autre région d'épaulement (9) du pneumatique.

5. Pneumatique pour véhicule selon l'une quelconque des revendications précédentes, caractérisé en ce que l'enroulement (3) de bandage n'a pas de couche de couverture.

6. Pneumatique pour véhicule selon l'une quelconque des revendications précédentes, caractérisé en ce que les fils ou câblés (5) sont formés d'acier.

7. Pneumatique pour véhicule selon l'une quelconque des revendications 1 à 5, caractérisé en ce que les fils ou câblés (5) sont constitués d'un matériau textile, en particulier d'aramide ou d'un matériau hybride avec l'aramide et un autre matériau textile tel que le "Nylon" et la rayonne.
